# EUROPEAN PATENT APPLICATION

(11) **EP 2 940 642 A1**
(43) Date of publication of application: **04.11.2015**
(21) Application number: 12890943.9
(22) Date of filing: 28.12.2012
(51) Int. Cl.: G06Q 20/40, G06Q 20/00, G06F 19/00

(54) **METHOD FOR MUTUAL AUTHENTICATION FOR PAYMENT DEVICE**

(30) Priority: 27.12.2012 KR 20120154442
(71) Applicant: Shinhancard Co., Ltd., Seoul 100-709 (KR); KB Kookmincard Co., Ltd., Jongno-gu Seoul 110-719 (KR); Hyundai Card Co., Ltd., Seoul 150-706 (KR); Nonghyup Bank, Seoul 100-151 (KR); Samsung Card Co., Ltd., Seoul 100-742 (KR); Lotte Card Co., Ltd., Seoul 100-778 (KR)
(72) Inventor: PARK, Hae Chul, Seoul 156-030 (KR); LEE, Jeongjin, Seoul 138-220 (KR); KIM, Byungsoo, Seoul 140-040 (KR)
(74) Representative: Thibon, Laurent
(86) International application number: PCT/KR2012/011692
(87) International publication number: WO 2014/104436

(57) **Abstract**

Disclosed is a mutual authentication method for a payment device, in which location information of track 2 information is hidden when a credit card faces an inappropriate payment processing terminal, thus improving security of the credit card. To this end, the method, performed by a payment processing terminal processing the payment of the payment device, comprises: generating a first random value and a first hash value for the random value; and providing the random value to the payment device, and comparing a second hash value returned by the payment device and the first hash value. The payment processing terminal authenticates the payment device when the first hash value is identical to the second hash value. The payment device recognizes the payment processing terminal as a normal terminal when receiving a request for generating the second hash value for the random value, and provides card information to the payment processing terminal.

## Description

### Technical Field

The present invention generally relates to a method for mutual authentication for a payment device. More particularly, the present invention relates to a method for mutual authentication for a payment device, in which a payment processing terminal located near the payment device may identify and authenticate the payment device.

### Background Art

At present, a credit card is one of the most widely used payment means around the world. Subsequent to a magnetic credit card having a magnetic strip and an electronic credit card in which a chip for authentication is embedded, a credit card is now implemented using a form of a Universal Subscriber Identity Module (USIM) embedded in a mobile phone or a smart phone.

The expanded use of a credit card as a payment means also resulted in an increasing incidence of credit card-related crimes, such as fraudulent transactions, falsification and forgery of credit cards, etc.

In Asia, the ratio of crimes involving forgery of credit cards to all the crimes occurring in credit card transactions sharply increased from 7.1% (in 1988) to 32.4% (in 1994). Also, the number of forgery crimes has been increasing every year.

To solve problems caused by forgery of credit cards, the world's three major card companies, Visa card, Master card, and Euro pay, have specified Euro/Master/Visa (EMV) standards, and issue credit cards according to EMV standards. A credit card according to EMV standards may not be forged or falsified, and requires a customer to input a personal access number to a payment processing terminal to pay for goods or services with a credit card. Therefore, credit cards according to EMV standards are positively evaluated for greatly improving security compared to existing magnetic credit cards.

Such EMV standards are applied to various payment means as well as credit cards. For example, Korean Patent Application Publication No. 10-2007-0093530 proposed a method for high-speed contactless payment in which payment according to EMV standards is induced in a vehicle moving in high-speed by using contactless credit cards according to EMV standards. In Korean Patent Application Publication No. 10-2007-0093530, an EMV type of IC card mounted in a vehicle and an EMV terminal device installed in a tollgate process data by sequentially executing commands GET PROCESSING OPTIONS - READ RECORD - GENERATE AC, according to common EMV standards.

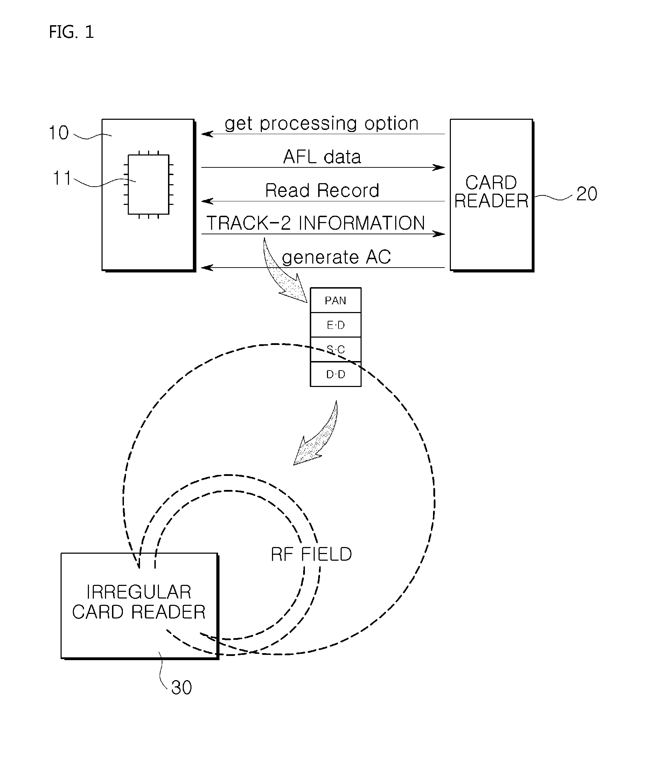

Among commands transmitted from a payment processing terminal or an EMV terminal device to an EMV credit card, according to EMV standards, when GET PROCESSING OPTIONS command is transmitted to the IC card, the IC card may output version information, mobile service company information, and AFL data to the EMV terminal device. In this case, the AFL data output to the EMV terminal device includes information about a location in which track 2 information according to ISO 7813 standards is stored in the EMV card. If this location information is exposed to the outside, it may be used by malicious persons to hack the EMV card, thus use thereof requires special precautions. The AFL data is explained referring to FIG. 1.

FIG. 1 illustrates a reference drawing of a transaction processing process between an EMV card and an EMV terminal.

Referring to FIG. 1, when an EMV credit card 10 is touched on or is placed close to a legitimate EMV credit card payment terminal 20 (for example, in a range of several to dozens of centimeters), the EMV credit card 10 may wirelessly transmit card information, which is contained in an IC chip 11 embedded in the EMV credit card, to the EMV payment terminal 20.

In this case, the EMV payment terminal 20 transmits GET PROCESSING OPTIONS command to the EMV credit card 10 to initiate a transaction. In response to the GET PROCESSING OPTIONS command, the EMV credit card 10 transmits version information of an application, mobile service company information, and Application File Locator (AFL) information to the EMV payment terminal 20, the AFL information indicating address information of a memory or a memory block, which includes card information.

The EMV payment terminal 20 extracts track 2 information from the EMV credit card 10 referring to the AFL information, and transmits the extracted track 2 information to a VAN server (not illustrated) or a credit card company server (not illustrated) to perform the credit card payment process.

On the other hand, because the EMV credit card 10 and the EMV payment terminal 20 perform Radio Frequency (RF) communication, when an irregular payment terminal 30 within the RF field is placed close to the EMV credit card 10, the irregular payment terminal 30 may obtain application version information, mobile service company information, and track 2 information from the EMV credit card 10.

Currently, a device that is connected to a portable terminal to obtain card information from another portable terminal is available.

In this situation, an irregular payment terminal 30 may obtain card information from an EMV credit card 10 without permission of a card holder, and the obtained card information may be wrongfully used.

Therefore, the present applicant intends to provide a mutual authentication method for a payment device in which an EMV credit card 10 and an EMV payment terminal 20 may mutually determine whether the target of a transaction is legitimate or not, and in which card information is sent and received only between the legitimate targets 10 and 20 of the transaction.

### Disclosure

### Technical Problem

An object of the present invention is to provide a method for mutual authentication for a payment device, in which a legitimate payment processing terminal and credit card may send and receive card information by enabling the credit card and the payment terminal to mutually determine whether the target of a transaction is legitimate. Accordingly, the mutual authentication method for a payment device may reduce security threats caused by exposure of information and hacking by an irregular payment terminal.

### Technical Solution

In order to accomplish the above object, the present invention provides a method for mutual authentication for a payment device, the method, which is performed by a payment processing terminal that processes payment of the payment device, including: generating a first random value and a first hash value for the random value; and authenticating the payment device by providing the random value to the payment device and by comparing the first hash value with a second hash value returned from the payment device, wherein the payment processing terminal authenticates the payment device when the first hash value is the same as the second hash value, and when receiving a request for generating the second hash value for the random value, the payment device recognizes the payment processing terminal as a regular payment processing terminal and provides card information.

According to the present invention, the above object is accomplished by a method, which is performed by a payment processing terminal that processes payment of the payment device, including: generating a first random value and a first hash value for the random value; authenticating the payment device by providing the first random value to the payment device and by comparing the first hash value with a second hash value returned from the payment device; and being authenticated by the payment device, by providing a second hash value for the second random value provided by the payment device.

### Advantageous Effects

According to the present invention, when a credit card faces an irregular payment terminal, information of a location in which track 2 information is stored in a credit card is hidden, thus improving security of the credit card.

### Description of Drawings

FIG. 1 illustrates a reference drawing of a process in which an EMV card and an EMV terminal transmit AFL;
FIG. 2 and 3 illustrate a concept diagram of a mutual authentication method for a payment device, according to the present invention;
FIG. 4 illustrates a flow diagram of a mutual authentication method for a payment device, according to an embodiment of the present invention;
FIG. 5 illustrates a flow diagram of a mutual authentication method for a payment device, according to another embodiment of the present invention;
FIG. 6 illustrates an example of a block diagram of a payment processing terminal used for implementing the present invention; and
FIG. 7 illustrates a reference drawing of an example in which a hash value is generated using a hash algorithm.

### Best Mode

Track 2 information mentioned herein may mean card information according to ISO 7813 standards.

A payment device mentioned herein may be an electronic credit card including track 2 information or a portable terminal in which a Universal Subscriber Identity Module (USIM) chip is embedded.

In this specification, a portable terminal is described and explained mainly envisioning a smart phone and a mobile phone. However, in addition to the smart phone and mobile phone, a portable device in which a USIM chip is embedded to be a substitute for credit cards may be referred to as a portable terminal, without specific mention.

A payment processing terminal mentioned herein may indicate a device capable of transaction processing by obtaining card information (for example, track 2 information) from an electronic credit card in which an integrated circuit (IC) is embedded or from a portable terminal in which a USIM chip is embedded. Here, the payment processing terminal may process a transaction with either the electronic credit card or the portable terminal, or may process transactions with both of them. However, the payment processing terminal is not limited to the above examples.

EMV mentioned herein is an acronym for Euro/Master/Visa, and indicates standards for preventing a card from being forged or falsified, in which an encrypted IC chip is used and a Personal Identification Number (PIN) is required to be input to a payment processing terminal for every transaction using a credit card.

Track 2 information mentioned herein includes a Primary Account Number (PAN) area, an Expiration Date (ED) area, a Service Code (SC) area, and a Discretionary Data (DD) area. In this case, the PAN area may be a variable form of PAN invented by the present applicant. As the variable form of PAN discloses a Bank Information Number (BIN) of track 2 information and encrypts card account information excluding the BIN, the card account information is not exposed during a credit card transaction.

A hash value mentioned herein may mean a hash value generated by a hash algorithm such as Secure Hash Algorithm-1 (SHA-1), SHA-2, and Message-Digest Algorithm 5 (MD 5). Various other hash algorithms can also be used.

A payment processing terminal mentioned herein may perform data communication with a credit card, according to EMV standards. However, the payment processing terminal mentioned in this specification maintains data communication when facing a payment device such as a correct credit card or portable terminal. When the payment processing terminal faces an incorrect payment device, data communication may not be maintained. In other words, the credit transaction may be stopped.

Hereinafter, the present invention is described in detail referring to the drawings.

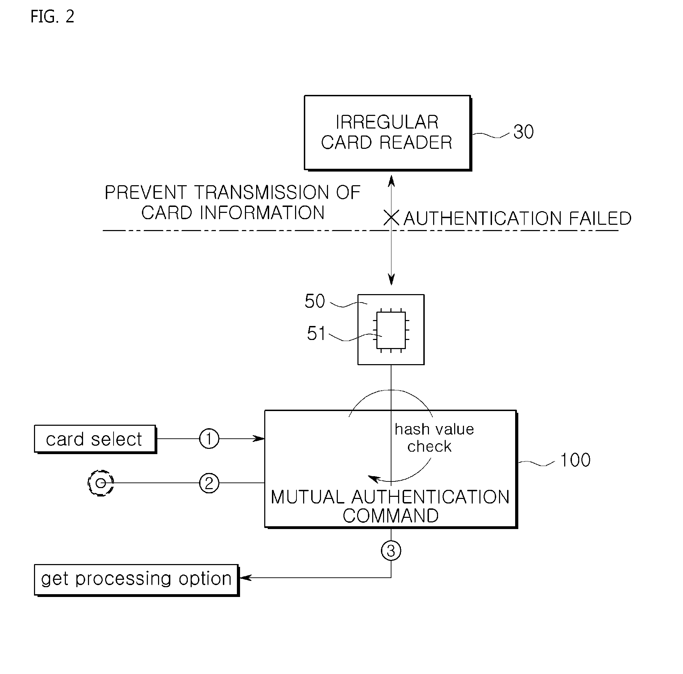

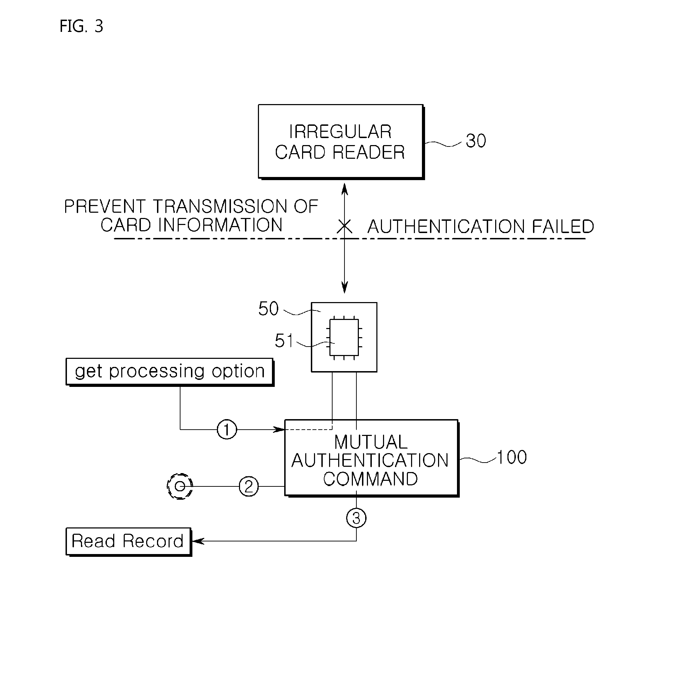

FIG. 2 and 3 illustrates a concept diagram of a mutual authentication method for a payment device, according to the present invention.

First, referring to FIG. 2, when a payment device 50 is placed close to or touched on a payment processing terminal 100, the payment processing terminal 100 detects the payment device 50 located at a close distance (from several to dozens of centimeters) and requests a list of application programs from the payment device 50. The payment device 50 transmits the list of application programs to the payment processing terminal 100. The list of application programs transmitted from the payment device 50 to the payment processing terminal 100 has a form of a file, and in the case of a credit card according to EMV standards, a file such as 1PAY.SYSDDF01 may be sent from the payment device 50 to the payment processing terminal 100. Here, the application program may mean a payment program that is used for payment when the payment is made by the payment device 50.

After the list of application programs is transmitted from the payment device 50 to the payment processing terminal 100, the payment processing terminal 100 operates the payment device 50 by referring to an application program executable in the payment device 50. Here, two or more credit cards may be within a range of communication coverage. In this case, the payment processing terminal 100 should select one from among the multiple credit cards (or multiple portable terminals). At this time, a command generated in the payment processing terminal 100 corresponds to a command for selecting a card, which is Card Select command.

After a credit card for the credit transaction is selected, the payment processing terminal 100 executes a mutual authentication command to authenticate the credit card rather than executing GET PROCESSING OPTIONS command that should be processed after the Card Select command.

The mutual authentication command is a command for creating an authentication value while the payment device 50 and the payment processing terminal mutually send and receive data, and for determining using the authentication value whether the target of the transaction is correct. The mutual authentication command does not exist in EMV standards.

The mutual authentication command is generated and executed depending on the following processes.
1) A payment processing terminal 100 generates a random value. In this case, the random value may be either a value generated according to the time at which a payment device 50 is detected by the payment processing terminal 100 or a value randomly generated by the payment processing terminal 100 after the payment device 50 is detected by the payment processing terminal 100. Besides, the payment processing terminal 100 may generate a random value using arbitrary time after the payment device 50 faces the payment processing terminal 100.
2) The payment processing terminal 100 generates a hash value by executing a hash algorithm that uses a preset encryption key and receives the random value as an input value.
3) The payment processing terminal 100 transmits the random value, which is input to the hash algorithm, to the payment device 50.
4) The payment device 50 executes a hash algorithm by receiving the transmitted random value as an input, generates a hash value for the random value provided by the payment processing terminal 100, using an encryption key that is contained in the payment device, and returns the generated hash value to the payment processing terminal 100.
5) The payment processing terminal 100 compares the hash value returned from the payment device 50 with the hash value generated in step 2), and determines whether they are the same.
6) If the hash value returned from the payment device 50 is the same as the hash value generated in the payment processing terminal, the payment processing terminal 100 determines that the payment terminal 50 is legitimate and executes a next command (GET PROCESSING OPTIONS command). Otherwise, the payment processing terminal does not execute the next command (GET PROCESSING OPTIONS command), and terminates the credit transaction process.

On the other hand, when an irregular payment processing terminal, for example, a portable irregular payment processing terminal 30 exists within communication coverage, the irregular payment processing terminal 30 transmits GET PROCESSING OPTIONS command to the payment device 50, and the payment device 50 may wait for a mutual authentication command.

If the irregular payment processing terminal 30 does not provide the mutual authentication command, the payment device 50 determines that the terminal is not a correct target of the transaction, and does not provides track 2 information to the irregular payment processing terminal 30.

According to the above-described processes from 1) to 6), the payment processing terminal 100 initiates an application program of the payment device 50 by executing GET PROCESSING OPTIONS command after Card Select command.

Here, the encryption key does not mean an additional key for executing the hash algorithm. The encryption key is a static value contained in both the payment device 50 and the payment processing terminal 100, and serves as an encryption key by being automatically disposed in the front and the rear of the random value when the hash algorithm is executed, but is not an encryption key itself.

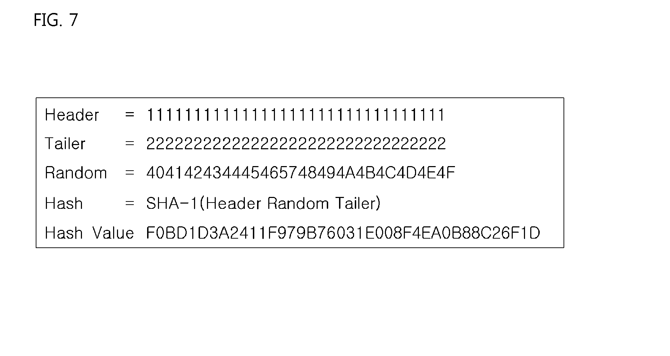

A method for calculating a hash value through a hash algorithm applied in the present embodiment is described referring to FIG. 7.

Referring to FIG. 7, a hash algorithm may calculate a hash value by receiving a header value, a tailer value, and a random value as inputs.

In FIG. 7, if the header value is "11111111111111111111111111111111", the tailer value is "22222222222222222222222222222222", and the random value is "404142434445464748494A4B4C4D4E4F", the hash algorithm may generate a hash value by using the header value | the random value | the tailer value as an input value.

According to an order illustrated in FIG. 7, suppose that a hash value generated in the payment device 50 by using (the header value | the random value | the tailer value) as an input value is a first hash value and a hash value generated in the payment processing terminal 100 by using (the header value | the random value | the tailer value) as an input value is a second hash value. Under the condition that the two header values and the two tailer values are respectively the same, when the same random value is shared, the first hash value generated in the payment device 50 should be same as the second hash value generated in the payment processing terminal 100.

In other words, the payment device 50 and the payment processing terminal 100 generate a hash value by using a header value and a tailer value as encryption keys. In this case, because the header value and the tailer value are not exposed during data transmission between the payment device 50 and the payment processing terminal 100, it is difficult for others to be aware of the values. As the header value and the tailer values are just added to the front and the rear of the random value and are not recognized as an encryption key, the first hash value and the second hash value, according to the hash algorithm, may not be easily inferred by others.

Here, the encryption method of a hash algorithm described in FIG. 7 is applied identically across this specification, and repeated description is omitted.

Next, referring to FIG. 3, when the payment device 50 is placed close to the payment processing terminal 100, the payment processing terminal 100 detects the payment device 50 located at a close range (from several to dozens of centimeters), requests a list of application programs from the payment device 50, and operates an IC chip 51 embedded in the payment device 50 by referring to the list of application programs. Then, one credit card is selected by using Card Select command if multiple credit cards are within communication coverage, as described above in FIG. 2. An embodiment of FIG. 3 is different from the embodiment of FIG. 2 in that the payment processing terminal 100 executes mutual authentication command after executing GET PROCESSING OPTIONS command. After executing the GET PROCESSING OPTIONS command, when the payment processing terminal 100 executes READ RECORD command, the payment device 50 transmits track 2 information according to ISO/IEC 7813 standards to the payment processing terminal 100 in response to the command. Consequently, before track 2 information is transmitted from the payment device 50 to the payment processing terminal 100, the payment processing terminal 100 executes the mutual authentication command, thus the payment device 50 may determine whether it is conducting a credit transaction with a correct payment processing terminal 100.

In the case of a mutual authentication method of FIG. 3, when an irregular payment processing terminal, for example, a portable irregular payment processing terminal 30 exists within communication coverage, the irregular payment processing terminal 30 transmits GET PROCESSING OPTIONS command to the payment device 50, and the payment device 50 may wait for mutual authentication command.

If the irregular payment processing terminal 30 does not provide the mutual authentication command, the payment device 50 determines that the terminal is not a correct target of the transaction, and does not provide card information (for example, track 2 information) to the irregular payment processing terminal 30.

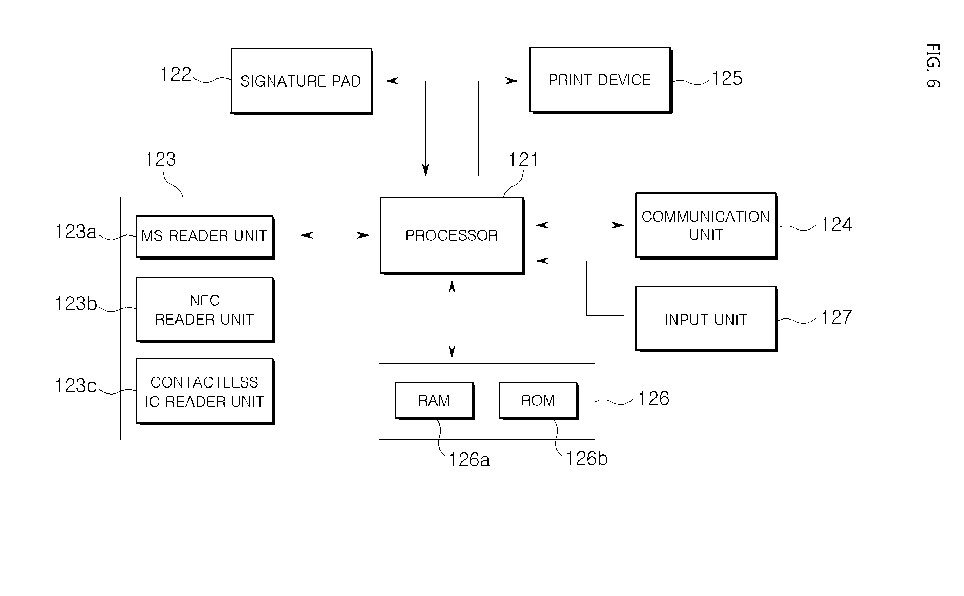

The mutual authentication method of FIG. 3 is performed identically as the processes from 1) to 6) described in the embodiment of FIG. 2, and comparison of hash values according to FIG. 6 is identically processed. However, the process of 6) described in FIG. 2 may be substituted by the following 6-1).
6-1) If a hash value returned from the payment device 50 is the same as a hash value generated in the payment processing terminal, the payment processing terminal 100 determines that the payment device 50 is a correct device for the transaction, and executes a next command (READ RECORD command). Otherwise, the payment processing terminal 100 does not execute the next command (READ RECORD command), and terminates the credit transaction process.

After GET PROCESSING OPTIONS command illustrated and described in FIG. 2 and 3 is executed, the payment processing terminal 100 executes a command for executing an application (GENERATE AC command) when the payment amount and a PIN are input by a card holder. The command for executing the application is transmitted to the payment device 50, and the payment device 50 returns Authorization Request Cryptogram (ARQC) to the payment processing terminal 100 in response to the application executing command.

After receiving the ARQC, the payment processing terminal 100 generates payment authorization request data including payment authorization information that includes card information, payment processing terminal information, and an affiliation code, and then transmits the data to a card company server (not illustrated) via a VAN server (not illustrated) to inquire of validity of the credit card. Accordingly, the payment processing terminal 100 performs the payment authorization process according to EMV standards. Also, by using the mutual authentication process, which does not exist in EMV standards, only a correct payment device 50 and payment processing terminal 100 may perform the payment process.

Also, only when the payment device 50 and the payment processing terminal 100 are legitimate for the credit transaction and face each other at a short distance, location information about a storage area including track 2 information and card information is provided from the payment device 50 to the payment processing terminal 100. Accordingly, hacking attempts by others may be prevented in advance.

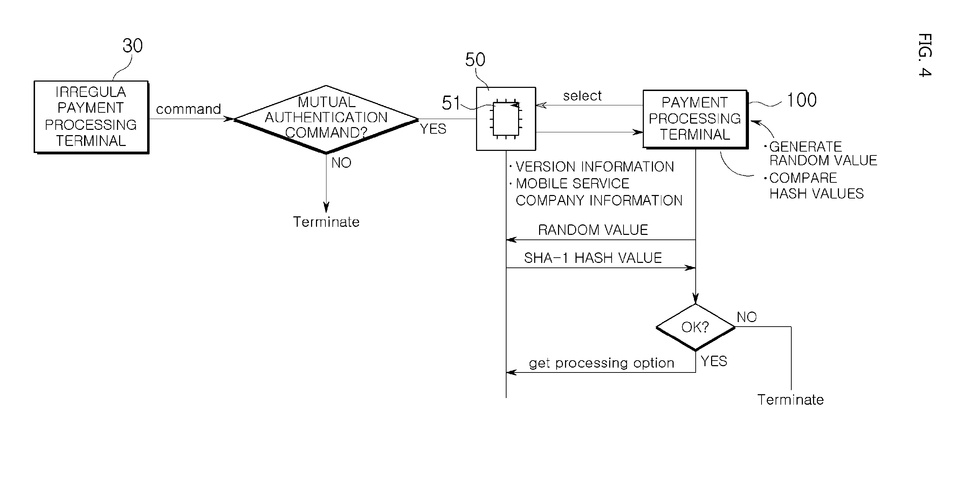

FIG. 4 illustrates a flow diagram of a mutual authentication method for a payment device, according to an embodiment of the present invention.

Referring to FIG. 4, the authentication method for a payment device according to an embodiment may perform a payment process by the following processes. When a payment device 50 is placed close to a payment processing terminal 100 at a short distance (from several to dozens of centimeters), the payment processing terminal 100 detects the payment device 50. Then, if two or more credit cards exist within communication coverage, the payment processing terminal selects one credit card through Card Select command.

In this case, the payment device 50 may be located within communication coverage of two or more payment processing terminals 30 and 100. When the payment processing terminal 100 and an irregular payment processing terminal, which are targets of a transaction, are in the same communication coverage, the payment device 50 that performs communication using RF communication may determine whether a mutual authentication command is transmitted from the irregular payment processing terminal 30 and from the payment processing terminal 100. Track 2 information is provided only to the payment processing terminal 100 transmitting the mutual authentication command, and transmission of card information may be prevented for the irregular payment processing terminal 30, which does not transmit the mutual authentication command.

Next, the payment processing terminal 100 generates a random value, and may generate a hash value for the generated random value, using a hash algorithm.

The generated hash value is temporarily stored in the payment processing terminal 100, and the generated random value is transmitted to the payment device 50 to request a hash value for the random value.

In this case, the payment device 50 and the payment processing terminal 100 may have the same encryption key, and when a hash algorithm in which the same random value is input and the same encryption key is applied is used, the same hash value may be calculated.

The payment device 50 generates a hash value by executing a hash algorithm by receiving the random value, provided by the payment processing terminal 100, as an input and returns the generated hash value to the payment processing terminal 100.

The payment processing terminal 100 compares the hash value returned from the payment device 50 with the temporarily stored hash value. Before GET PROCESSING OPTIONS command is executed, the payment processing terminal 100 obtains only a list of application programs, mobile service company information, and version information of the application programs from the payment device 50. Therefore, card information of the payment device 50 is not completely obtained.

In other words, the embodiment is characterized in that the payment processing terminal 100 performs mutual authentication with the payment device 50 before obtaining information about a location of track 2 information from an IC chip 51 of the payment device 50, in order that an irregular payment processing terminal may not obtain the location information of track 2 information from the payment device 50.

Also, the mutual authentication method for the payment device according to the embodiment may prevent the payment device 50 from exposing the location information of track 2 information to the payment processing terminal 100 when a credit card holder cancels the credit transaction.

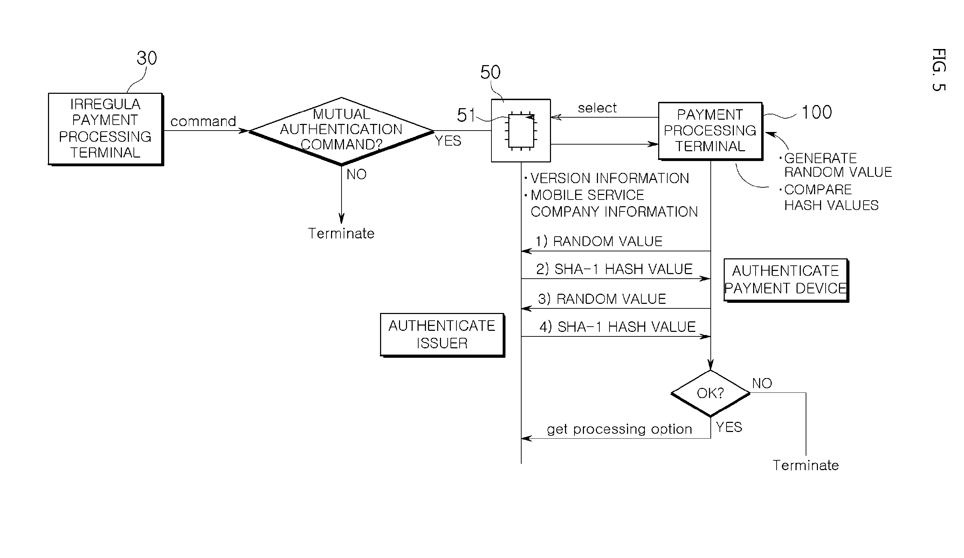

FIG. 5 illustrates a flow diagram of a mutual authentication method for a payment device, according to another embodiment of the present invention.

Referring to FIG. 5, in the mutual authentication method for the payment device 50 according to the embodiment, when the payment device 50 is placed close to a payment processing terminal 100 at a short distance (from several to dozens of centimeters), the payment processing terminal 100 detects the payment device 50. Then, if two or more payment devices are within communication coverage, the payment processing terminal may perform the payment process by selecting one payment device through Card Select command.

In this case, the payment device 50 may be located within communication coverage of two or more payment processing terminals 30 and 100. When the payment processing terminal 100 and an irregular payment processing terminal, which are targets of a transaction, are in the same communication coverage, the payment device 50 that performs communication using RF communication may determine whether a mutual authentication command is transmitted from the irregular payment processing terminal 30 and from the payment processing terminal 100. Track 2 information is provided only to the payment processing terminal 100 transmitting the mutual authentication command, and transmission of card information may be prevented for the irregular payment processing terminal 30, which does not transmit the mutual authentication command.

Next, the payment processing terminal 100 generates a random value, transmits it to the payment device 50, and may obtain an encryption value, which is encrypted for the first random value and is returned from the payment device 50. In this case, the payment processing terminal 100 generates in advance an encryption value using the first random value that is provided to the payment device, and may authenticate the payment device 50 as a correct device when the encryption value returned from the payment device 50 is the same as the generated encryption value.

In this case, the payment device 50 and the payment processing terminal 100 may generate the encryption values using the same hash algorithm.

Next, the payment processing terminal 100 generates a second random value, and generates a hash value for the generated second random value, using a hash algorithm.

The generated hash value is temporarily stored in the payment processing terminal 100, and the generated random value is transmitted to the payment device 50 to request a hash value for the random value.

In this case, the payment device 50 and the payment processing terminal 100 may have the same encryption key, and when a hash algorithm in which the same random value is input and the same encryption key is applied is used, the same hash value may be calculated.

The payment device 50 generates a hash value by executing a hash algorithm by inputting the random value provided by the payment processing terminal 100, and returns the generated hash value to the payment processing terminal 100.

The payment processing terminal 100 compares the hash value returned by the payment device 50 with the temporarily stored hash value. Before GET PROCESSING OPTIONS command is executed, the payment processing terminal obtains only a list of application programs, mobile service company information, and version information of the application programs. Therefore, card information of the payment device 50 is not completely obtained.

Next, the payment device 50 generates an arbitrary random value (hereinafter, referred to a second random value) and generates a first hash value by executing a hash algorithm using the generated second random value as an input.

Subsequently, the payment device 50 provides the second random value to the payment processing terminal 100, and may receive a second hash value, which is obtained by using the same hash algorithm, from the payment processing terminal 100. If the payment processing terminal 100 is a regular payment processing terminal 100, the first hash value generated in the payment device is the same as the second hash value obtained from the payment processing terminal 100. Accordingly, the payment device 50 may confirm that the payment processing terminal 100 is a regular payment processing terminal.

After that, the payment device 50 may receive GET PROCESSING OPTIONS command or READ RECORD command from the payment processing terminal 100, and may provide card information to the payment processing terminal 100 when the corresponding command is received.

The present embodiment is advantageous because the payment device 50 provides card information to the payment processing terminal 100 after mutual authentication has been completed by the payment device 50 and the payment processing terminal 100 and the card information is not exposed to an irregular payment processing terminal 30.

FIG. 6 illustrates an example of a block diagram of a payment processing terminal that is used for implementing the present invention.

Referring to FIG. 6, a payment processing terminal 100 may include a processor 121, a signature pad 122, a reader unit 123, a communication unit, a print unit 125, a memory 126, and an input unit 127.

The processor 121 generally controls the payment processing terminal 100; receives a request for transaction processing from a payment device 50 such as a magnetic credit card, an electronic credit card, and a portable terminal, via the reader unit 123; generates payment information by combining a payment amount, input from the input unit 127, and an image of a signature, obtained from the signature pad 122; and may process a transaction by providing the generated payment information to a VAN server 150 or a card company server 100, via the communication unit 124.

The processor 121 may count the present time by containing therein a Real Time Clock (RTC), or by connecting to an RTC.

Also, the processor 121 may contain therein a co-processor, or may connect with a separate co-processor. Also, the processor 121 may execute a program for implementing a hash algorithm by being interconnected with the co-processor. The program for implementing a hash algorithm may be stored in the memory 126.

The memory 126 may include volatile memory 126a and non-volatile memory 126b. The volatile memory 126a may be comprised of DRAM or SRAM, and may be used for temporary storage for executing a program when the processor 121 executes the program for controlling or operating each of the units 122 to 127.

The non-volatile memory 126b may store a program for implementing a hash algorithm by the processor 121 and an operating system for the payment processing terminal 100.

After a transaction requested by the payment device 50 is processed, a print device 25 outputs a receipt by printing payment statements of the payment device 50. Also, the communication unit 124 may be connected to a VAN server or a card company server by a network using wired or wireless communication.

The reader unit 123 may contact with the payment device 50 to read track 2 information or may obtain track 2 information from a payment device 50 in close proximity by a contactless method.

Desirably, the reader unit 123 may include an MS reader unit 123a that reads track 2 data by contacting with a magnetic strip; an NFC reader unit 123b that obtains information of a USIM, which is mounted in a portable terminal, and credit card information by performing Near Field Communication (NFC) with the portable terminal; and a contactless IC reader unit 123c that obtains track 2 data from an electronic credit card by performing data communication with the electronic credit card. Here, the reader unit 123 may include any one of the MS reader unit 123a, the NFC reader unit 123b, and the contactless IC reader unit 123c, or may include two or three of them.
<50: credit card> <51: IC chip>
<100: payment processing terminal>

### Industrial Applicability

The present invention enables a payment device to process payment through a legitimate payment processing terminal, and enables the payment to be processed by mutual authentication between the payment device and the payment processing terminal. Also, the present invention may contribute to expansion of financial business such as credit card companies or banks, which provide a credit card payment environment or a mobile payment environment.

## Claims

1. A method for mutual authentication for a payment device, the method, which is performed by a payment processing terminal that processes payment of the payment device, comprising:
generating a first random value and a first hash value for the random value; and
authenticating the payment device by providing the random value to the payment device and by comparing the first hash value with a second hash value returned from the payment device,
wherein:
the payment processing terminal authenticates the payment device when the first hash value is the same as the second hash value, and
when receiving a request for generating the second hash value for the random value, the payment device recognizes the payment processing terminal as a regular payment processing terminal and provides card information.

2. The method of claim 1, wherein the payment processing terminal executes get processing options command for obtaining location information of a storage area containing card information when the second hash value is the same as the first hash value.

3. The method of claim 2, wherein the payment processing terminal cancels a payment process by the payment device when the first hash value is not the same as the second hash value.

4. The method of claim 1, wherein the payment terminal device executes Read Record command to read card information from the payment device when authentication of the payment processing terminal and the payment device has been completed.

5. The method of claim 1, wherein the hash value and the returned value are hash values generated by a hash algorithm.

6. The method of claim 1, wherein the hash value is a hexadecimal value.

7. The method of claim 1, wherein the first hash value and the second hash value are compared in a state in which the values are encrypted by a hash algorithm.

8. The method of claim 1, wherein the random value is a value arbitrarily generated in the payment processing terminal.

9. The method of claim 1, wherein the first hash value and the second hash value are hash values generated by receiving the random value, a header value, and a tailer value, as inputs, the header value and the tailer value being added to the front and the rear of the random value, respectively.

10. The method of claim 9, wherein the header value and the tailer value are static values, and are automatically added to the random value.

11. The method of claim 10, wherein the header value and the tailer value are digit strings.

12. The method of claim 1, wherein when the payment processing terminal does not make a request for generating the second hash value for the random value for mutual authentication, the payment device recognizes the payment processing terminal as an irregular payment processing terminal and does not provide card information to the payment processing terminal.

13. A method for mutual authentication for a payment device, the method, which is performed by a payment processing terminal that processes payment of the payment device, comprising:
generating a first random value and a first hash value for the random value;
authenticating the payment device by providing the first random value to the payment device and by comparing the first hash value with a second hash value returned from the payment device; and
being authenticated by the payment device, by providing a second hash value for the second random value provided by the payment device.

14. The method of claim 13, wherein the payment processing terminal obtains card information from the payment device after being authenticated by the payment device.
